(19) Europäisches Patentamt
European Patent Office
Office européen des brevets

(11) **EP 2 680 229 A1**

(12) **EUROPEAN PATENT APPLICATION**

(43) Date of publication:
 **01.01.2014 Bulletin 2014/01**

(51) Int Cl.:
 **G06T 11/20** *(2006.01)*

(21) Application number: **13167105.9**

(22) Date of filing: **08.05.2013**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(30) Priority: **11.05.2012 KR 20120050084**

(71) Applicant: **Samsung Electronics Co., Ltd.**
 **Suwon-si, Gyeonggi-do 443-742 (KR)**

(72) Inventors:
 • **Baek, Seung-cheon**
  **Gyeonggi-do**
  **Suwon-si (KR)**

• **Chang, Seung-cheon**
 **Jung-gu**
 **Seoul (KR)**
• **Cho, Jong-keun**
 **Gyeonggi-do**
 **Ansan-si (KR)**

(74) Representative: **Waddington, Richard**
 **Appleyard Lees**
 **15 Clare Road**
 **Halifax Yorkshire HX1 2HY (GB)**

(54) **Method for processing image and image processing apparatus thereof**

(57)    An image processing method to remove aliasing and an image processing apparatus thereof are provided. The image processing method includes receiving data information of a polygonal image, determining a position of an interpolation vertex on an exterior of vertexes of the polygonal image using the data information of the polygonal image, interpolating a space between the polygonal image and a polygon constructed by the interpolating vertex, and outputting an interpolated polygonal image according to the interpolated space. Accordingly, when complex polygons are displayed or the image size changes, the aliasing can be removed. Further, because the interpolating process is applied to primitives instead of a whole image to overcome the aliasing, the amount of calculations decreases.

# FIG. 2

200

EP 2 680 229 A1

**Description**

CROSS-REFERENCE TO RELATED APPLICATIONS

This application claims priority from Korean Patent Application No. 10-2012-0050084, filed on May 11, 2012, in the Korean Intellectual Property Office, the disclosure of which is hereby incorporated herein by reference in its entirety.

BACKGROUND

**1. Field**

Apparatuses and methods consistent with exemplary embodiments relate to image processing, and more specifically, to an image processing method which removes aliasing occurring in the output of polygonal images, and an image processing apparatus thereof.

**2. Description of the Related Art**

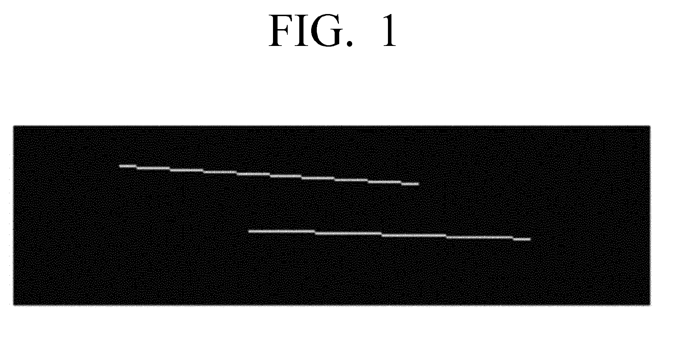

A display apparatus plays a role of outputting primitives such as lines or geometrical figures inputted from an external device. Primitives are generally accepted as lines, circles, curves, and polygonal figures that can be drawn, stored, and manipulated by computer graphic programs. Specifically, one of the most basic primitives is lines.
When drawing and outputting diagonal lines or figures using apparatuses such as the computer, a user may easily find aliasing as illustrated in FIG. 1. The aliasing is caused by the insufficient pixel size of the display screen or the insufficient resolution for the human eye to perceive. Thus, because the display apparatus utilizes smaller size pixels than humans can see, and draws the digital values such as lines or the polygonal figures using the combination of these pixels, aliasing occurs.
Therefore, a method is necessary, which can overcome the aliasing that can occur in the inputted primitives displayed on the display apparatus.

SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.
Exemplary embodiments provide an image processing method to remove aliasing that can occur in a displayed polygonal image, and an image processing apparatus thereof.
According to the present invention there is provided an apparatus and method as set forth in the appended claims. Other features of the invention will be apparent from the dependent claims, and the description which follows.
According to an exemplary embodiment, an image processing method is provided, the image processing method includes receiving data information of a polygonal image, determining a position of an interpolation vertex on an exterior of vertexes of the polygonal image using the data information of the polygonal image, interpolating a space between the polygonal image and a polygon constructed by the interpolating vertex, and outputting an interpolated polygonal image according to the interpolated space.
The data information regarding the polygonal image may include at least one of position information of the vertexes of the polygonal image, information regarding whether an angle of each of the vertexes of the polygonal image is concave or convex, and information of an interpolating coefficient.
The determining the position of the interpolating vertex may include determining a direction vector to determine the position of an interpolating vertex corresponding to a specific vertex, using a vector between the specific vertex and a prior vertex and a vertex between the specific vertex and a posterior vertex, and determining the position of the interpolating vertex corresponding to the specific vertex using the direction vector.
The determining the direction vector may include normalizing the vector between the specific vertex and the prior vertex and normalizing the vector between the specific vertex and the posterior vertex, and determining the direction and a size of the direction vector.
The determining the direction vector may include determining a sign of the direction vector according to whether an angle formed by the specific vertex is concave or convex.
The determining the position of the interpolating vertex may include determining the position of the interpolating vertex using scaling information regarding information of the direction vector and the size of the image.
A space between the polygonal image and the polygon constructed by the interpolating vertex may be divided into a plurality of areas, and different interpolating coefficients may be applied to each of the plurality of the areas respectively.

The interpolating may include interpolating the space between the polygonal image and the polygon constructed by the interpolating vertex by applying a translucency degree according to the interpolating coefficient.

According to an exemplary embodiment, an image processing apparatus is provided, which includes a data inputter which receives data information of a polygonal image, a graphic engine processor which determines a position of an interpolation vertex on an exterior of vertexes of the polygonal image using the data information of the polygonal image and interpolates a space between the polygonal image and a polygon constructed by the interpolating vertex, and outputs an interpolated polygonal image according to the interpolated space.

The data information of the polygonal image may include at least one of position information regarding the vertexes of the polygonal image, information regarding whether an angle of each of the vertexes of polygonal image is concave or convex, and information of an interpolating coefficient.

The graphic engine processor may determine a direction vector to determine the position of an interpolating vertex corresponding to a specific vertex, using a vector between the specific vertex and a prior vertex and a vertex between the specific vertex and a posterior vertex, and determine the position of the interpolating vertex corresponding to the specific vertex using the direction vector.

The graphic engine processor may normalize the vector between the specific vertex and the prior vertex and normalize the vector between the specific vertex and the posterior vertex, and determine the direction and the size of the direction vector.

The graphic engine processor may determine a sign of the direction vector according to whether an angle formed by the specific vertex is concave or convex.

The graphic engine processor may determine the position of the interpolating vertex using scaling information regarding information of the direction vector and a size of the image.

The graphic engine processor may divide a space between the polygonal image and the polygon constructed by the interpolating vertex into a plurality of areas, and apply different interpolating coefficients to each of the plurality of the areas respectively.

The graphic engine processor may interpolate the space between the polygonal image and the polygon constructed by the interpolating vertex by applying a translucency degree according to the interpolating coefficient.

According to an exemplary embodiment, a computer-readable recording medium comprising a program to implement an image processing method is provided, which includes receiving data information of a polygonal image, determining a position of an interpolation vertex on an exterior of vertexes of the polygonal image using the data information of the polygonal image, interpolating a space between the polygonal image and a polygon constructed by an interpolating vertex, and outputting the interpolated polygonal image according to the interpolated space.

According to an exemplary embodiment, an image processing method is provided, the method includes determining a position of an interpolation vertex on an exterior of vertexes of a first polygonal image using data information of the first polygonal image, determining a direction vector to determine the position of an interpolating vertex corresponding to a specific vertex, using a vector between the specific vertex and a prior vertex and a vertex between the specific vertex and a posterior vertex, determining the position of the interpolating vertex corresponding to the specific vertex using the direction vector; and generating an interpolated second polygonal image by interpolating a space between the first polygonal image and a third polygon constructed according to the interpolating vertex.

The data information of the first polygonal image may include at least one of position information regarding the vertexes of the first polygonal image, information regarding whether an angle of each of the vertexes of the first polygonal image is concave or convex, and information of an interpolating coefficient.

The space between the first polygonal image and the third polygon may be constructed by the interpolating vertex is divided into a plurality of areas, and different interpolating coefficients are applied to each of the plurality of the areas, respectively.


BRIEF DESCRIPTION OF THE DRAWINGS

The above and/or other aspects of the present inventive concept will be more apparent by describing certain exemplary embodiments of the present inventive concept with reference to the accompanying drawings, in which:

FIG. 1 is a view provided to explain aliasing;

FIG. 2 is a block diagram of an image processing apparatus according to an exemplary embodiment;

FIG. 3 illustrates a polygonal image according to an exemplary embodiment;

FIG. 4 illustrates direction vectors of vertexes according to an exemplary embodiment;

FIG. 5 illustrates direction vectors of a polygonal image according to an exemplary embodiment;

FIG. 6 illustrates a method of interpolating space between polygons constituting a polygonal image and an interpolating vertex;

FIGS. 7A to 7C present graphs of interpolating coefficients according to aspects of exemplary embodiments;

FIG. 8 illustrates an outputted polygonal image according to an exemplary embodiment;

FIG. 9 illustrates screens applied with several effects according to aspects of exemplary embodiments; and

FIG. 10 is a flowchart provided to explain an image processing method according to an exemplary embodiment.

DETAILED DESCRIPTION OF EXEMPLARY EMBODIMENTS

Certain exemplary embodiments of the present inventive concept will now be described in greater detail with reference to the accompanying drawings.

In the following description, same drawing reference numerals are used for the same elements even in different drawings. The matters described in the description, such as detailed construction and elements, are provided to assist in a comprehensive understanding of the present inventive concept. Accordingly, it is apparent that the exemplary embodiments of the present inventive concept can be carried out without those specifically described matters. Also, well-known functions or constructions are not described in detail since they would obscure the exemplary embodiments with unnecessary detail.

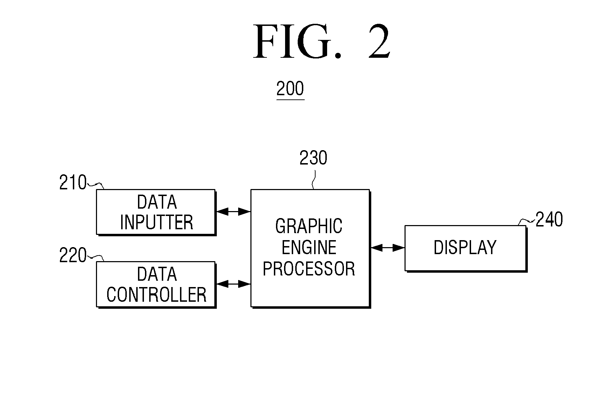

FIG. 2 is a block diagram of an image processing apparatus according to an exemplary embodiment. Referring to FIG. 2, the image processing apparatus 200 may include a data inputter 210, a data controller 220, a graphic engine processor 230 and a display 240. The image processing apparatus 200 may be implemented as a personal computer (PC), a tablet PC, a mobile phone, or a PDA, but is not limited thereto.

The data inputter 210 may externally receive data information of a polygonal image. The data information of the polygonal image may include at least one of vertex position information constituting the polygonal image, information regarding whether the angle of the polygonal vertex is concave or convex, and interpolating coefficient information. The vertex position information constituting the polygonal image may include information regarding the triangle formed by the vertexes as well as the coordinates of the vertexes.

The data controller 220 may control the data inputted through the data inputter 110. Specifically, the data controller 220 may perform scaling for converting the inputted data size.

Further, the data controller 220 may determine whether the inputted vertexes are interior or exterior. The data controller 220 may allocate the different interpolating coefficients according to whether the inputted vertexes are interior or exterior. For instance, if the data controller 220 determines the inputted vertexes to be interior, it may allocate the interpolating coefficient of 1. If the inputted vertexes are determined to be exterior, the interpolating coefficient of 0 may be allocated.

The graphic engine processor 230 may determine the interpolating vertex position outside of the vertexes of the polygonal image using the data information regarding the polygonal image inputted through the data inputter 210 and the information inputted to the data controller 220. The space between the inputted polygonal image and the interpolating vertex may be interpolated according to the interpolating coefficient.

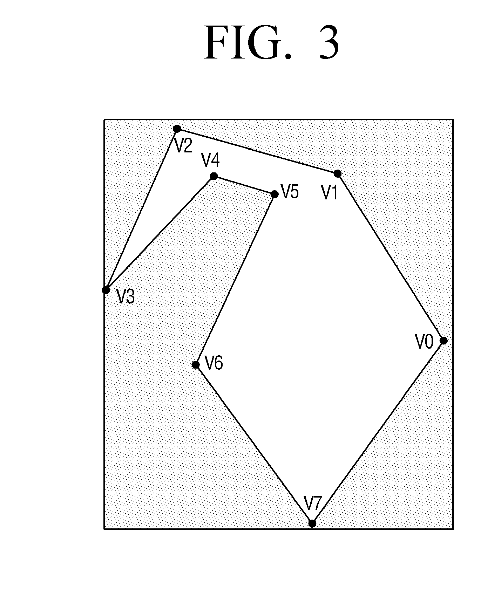

By referring to FIGS. 3 to 7, a method of processing the inputted polygonal images by the graphic engine processor 230 will be described in detail below.

First, as illustrated in FIG. 3, if the polygonal image including a plurality of vertexes v0, ... , v7 is inputted, the graphic engine processor 230 may allocate a prior vertex and a posterior vertex. For instance, the graphic engine processor 230 may allocate v0 as a prior vertex of v1, and v2 as a posterior vertex of v1. Further, the graphic engine processor 230 may allocate v1 as a prior vertex of v2, and v3 as a posterior vertex of v2. Likewise, the graphic engine processor 230 may allocate prior vertexes and posterior vertexes regarding a plurality of vertexes v0, ... , v7.

The graphic engine processor 230 may determine a plurality of interpolating coefficients according to the inputted information from the data controller 220. For instance, if v1 is determined to be exterior, an interpolating coefficient of v1 may be set as 0, and if v1 is determined to be interior, an interpolating coefficient of v1 may be set as 1.

Further, the graphic engine processor 230 may determine whether the angle of the specific vertex v1 is concave or convex according to the data information inputted from the data inputter 210. If an angle measured from the inside of the polygonal image regarding the specific vertex is less than 180 °, the angle is determined to be convex. If an angle measured from the inside of the polygonal image is more than 180 °, the angle is determined to be concave. For instance, because the angle of v1 measured from the inside of the polygonal image is less than 180 °, the angle may be determined to be convex.

The graphic engine processor 230 may utilize a vector between the specific vertex and a prior vertex and a vector between the specific vertex and a posterior vertex, and determine a direction vector to determine the position of an interpolating vertex corresponding to the specific vertex.

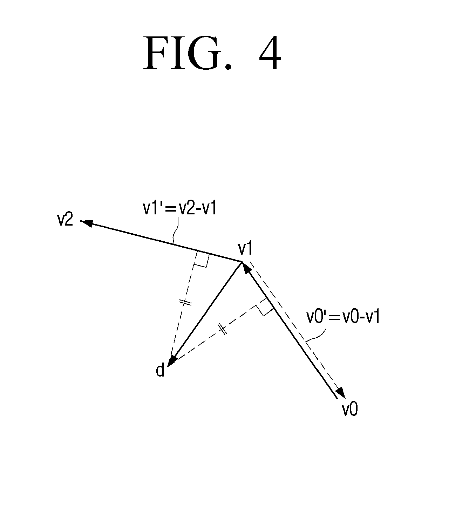

FIG. 4 illustrates a method of determining a direction vertex to determine the position of an interpolating vertex corresponding to the vertex v1. First, the graphic engine processor 230 may utilize the specific vertex v1 and the prior vertex v0 and calculate a first vector v0'. Next, the graphic engine processor 230 may utilize the specific vertex, v1 and the posterior vertex v2 and calculate a second vector v1'. The first vector v0' and the second vector v1' can be calculated by the following formula 1:

**【Formula 1】**

$$v0'=v0-v1, v1'=v2-v1$$

Thus, because a vector orthogonal to the first vector v0' and a vector orthogonal to the second vector v1' have the same interpolating distance, the direction vector d may be calculated by adding unit vectors of the two vectors, according to the following formula 2:

**【Formula 2】**

$$d=normalize(\frac{v0'}{|v0'|}+\frac{v1'}{|v1'|})$$

Further, the size s of the direction vector d can be calculated by the following formula 3:

**【formula 3】**

$$s=\frac{AAwidth}{\sin(t/2)}$$

where AAwidth indicates an interpolating distance, and t indicates an angle between the first vector v0' and the second vector v1'. The interpolating distance may be determined to be 1.

According to whether the vertex angle is concave or convex, a sign of the direction vector d may change. Specifically, if the vertex angle is convex, a sign of the direction vector may change. If the vertex angle is concave, the sign of the direction vector may not change.

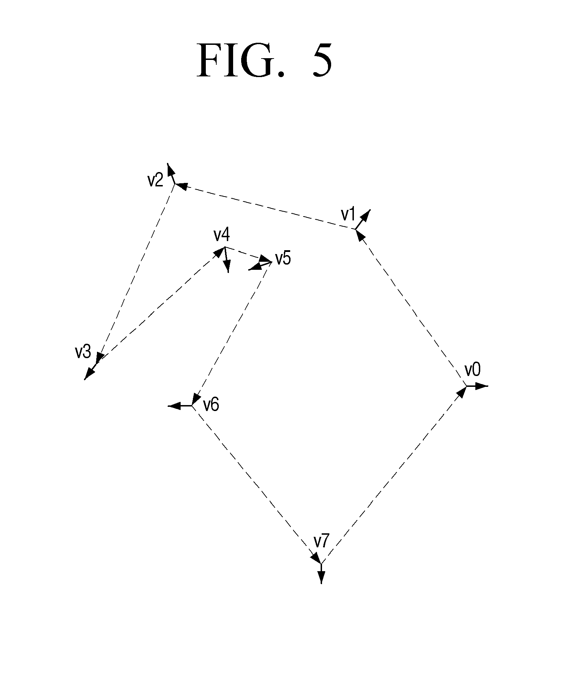

If direction vectors of a plurality of the vertexes v0, ... , v7 are calculated by the above described method, a direction vector respectively of a plurality of the vertexes v0, ... , v7 may be obtained, as illustrated in FIG. 5.

The graphic engine processor 230 may utilize direction vector information and scaling information of the image size and determine the position of an interpolating vertex. Specifically, the position of the interpolating vertex corresponding to the specific vertex can be calculated by the following formula 4:

**【Formula 4】**

Position = v1 + s x AAsign x c x d

where, v1 indicates position information of the specific formula, s indicates size of the direction vector, AAsign indicates a sign determined according to whether the specific vertex angle is concave or convex, c indicates a coefficient determined according to whether the specific vertex is interior or exterior, and d indicates a direction vector on a unit basis.

Position information of the specific vertex v1 may reflect the scaling information of the polygonal image. If the specific vertex position in the inputted polygonal image is changed by a scaling process, the position information v1 of the specific vector v1 may indicate the specific vertex position changed by the scaling process. Thus, even if the size and the shape of the polygonal image are changed by the scaling process, an interpolating vertex corresponding to the specific vertex can be obtained.

Further, c is 0.5 if the vertex is the outside and c is -(AAwidth-0.5) if the vertex is the inside. For instance, if the interpolating distance (AAwidth) is 1, c is 0.5 if the vertex is the outside, c is -0.5 and if the vertex is the inside.

If a plurality of the interpolating vertexes corresponding to a plurality of the vertexes v0, ... , v7 are obtained according to the above described method, the graphic engine processor 230 may interpolate the space between the inputted polygon and a polygon constructed by the interpolating vertex according to the interpolating coefficient. The space between the inputted polygon and a polygon constructed by the interpolating vertex may be divided into a plurality of areas, and the graphic engine processor 230 may apply different interpolating coefficients to each of the plurality of the areas.

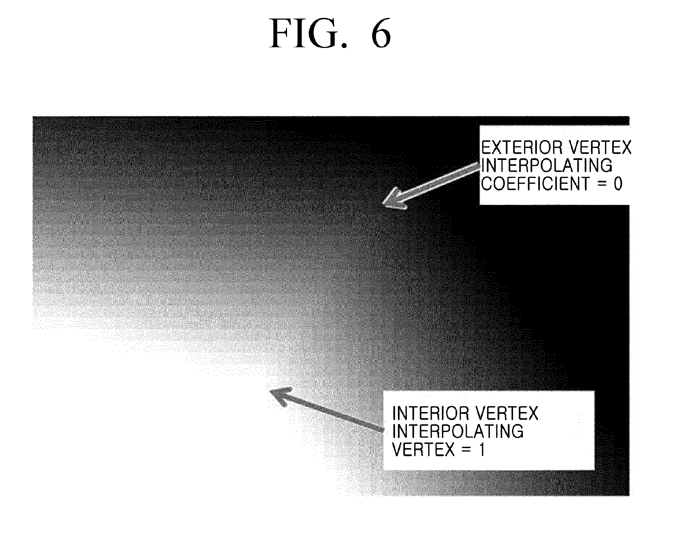

Referring to FIG. 6, the graphic engine processor 230 may apply the translucency degree to the space between the inputted polygon and a polygon constructed by the interpolating vertex according to the interpolating coefficient. If the interpolating coefficient is 1, a highest value of the translucency degree may be utilized to interpolate. If the interpolating coefficient is 0, a lowest value of the translucency degree may be utilized to interpolate. According to the interpolating coefficient, a corresponding translucency degree may be utilized for the interpolation.

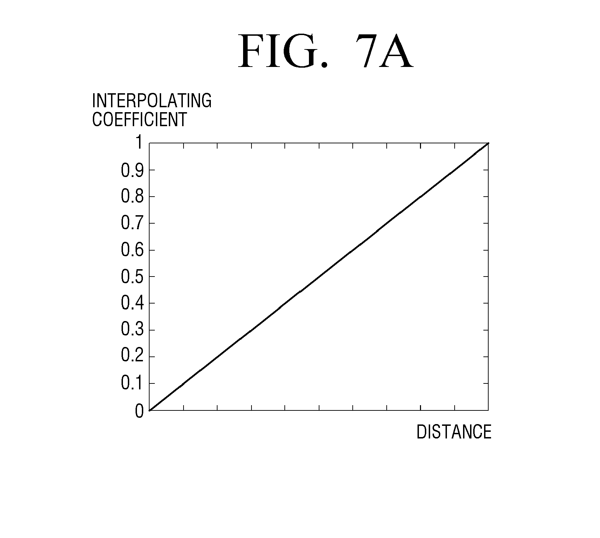

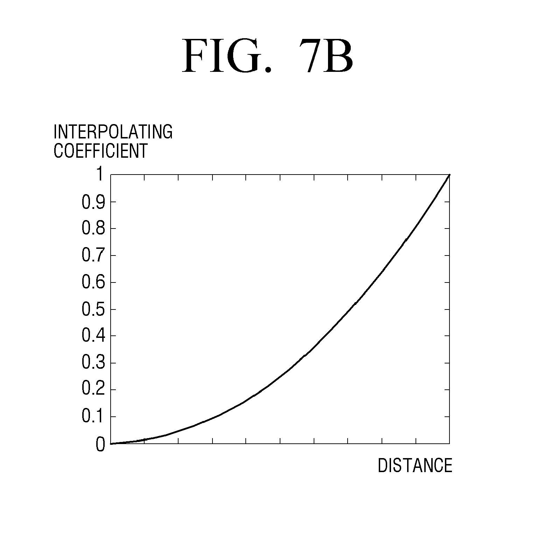

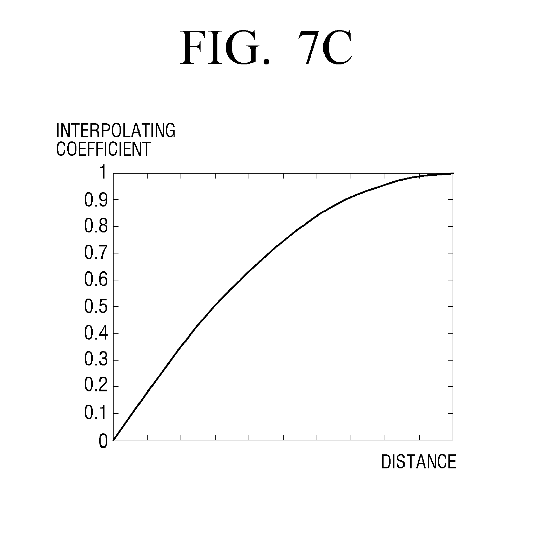

Referring to FIG. 7A, an interpolating coefficient may be proportional to the distance. However, this is merely one of the exemplary embodiments. As illustrated in FIGS. 7B and 7C, functions in which x coordinate is the distance from the point where the interpolating coefficient is 0 and y coordinate is the interpolating coefficient, may be applied.

The display 240 may output the polygonal image including the interpolated space between the inputted polygon and the polygon constructed by the interpolating vertex using the graphic engine processor 230.

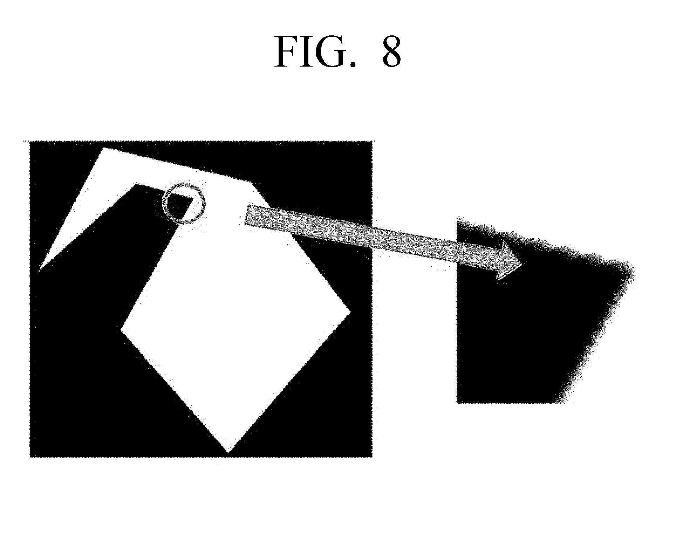

If the image processing apparatus 200 as described above interpolates line segments of the complex polygonal image, aliasing on the edge may be removed as illustrated in FIG. 8.

Further, if the scaling process is performed and the size of the polygonal image is changed, the aliasing that can occur in the polygonal image is removed.

Further, because the above embodiments may utilize a prior vertex and a posterior vertex of the specific vertex and determine an exterior interpolating vertex, the exemplary embodiments may be applied to the 3-dimensional technology.

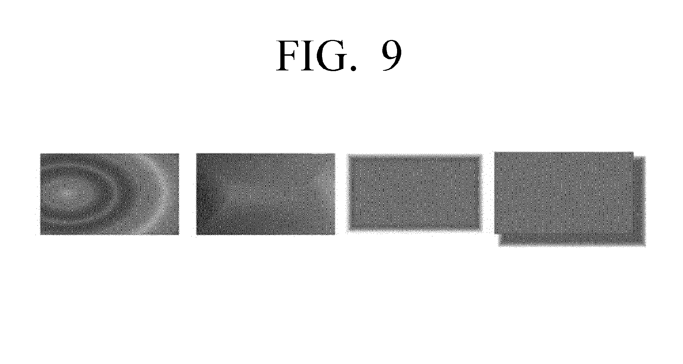

Furthermore, by setting an interpolating distance, an interpolating coefficient, and a color according to the exemplary embodiments, various visual effects may be implemented as illustrated in FIG. 9.

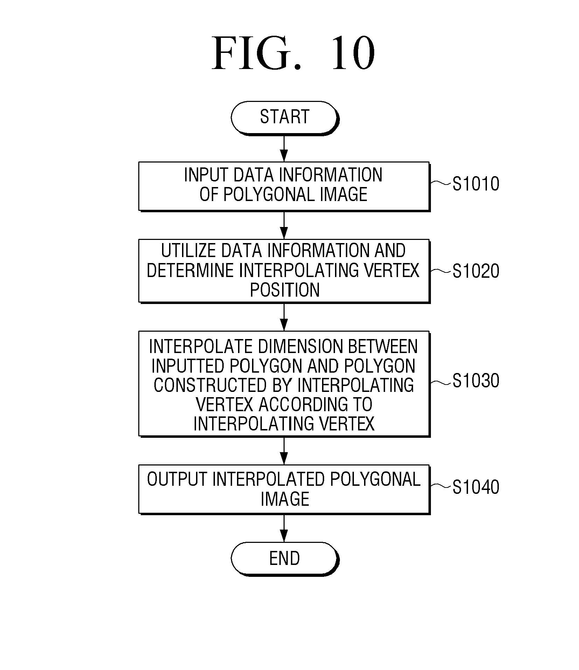

Referring to FIG. 10, an image processing method of the image processing apparatus 200 according to an exemplary embodiment will be described below.

The image processing apparatus 200 may receive the data information regarding the polygonal image at S1010. The information of the polygonal image may include at least one of the vertex position information, the information regarding whether the polygonal vertex angle is concave or convex, and the information of the interpolating coefficient. Further, the position information of the vertexes constituting the polygonal image may include the information regarding triangles constructed by the vertexes as well as coordinate values of the vertexes.

The image processing apparatus 200 may utilize the data information regarding the polygonal image and determine the corresponding position of the interpolating vertex at S1020. Specifically, the image processing apparatus 200 may utilize a vector between the specific vertex and its prior vertex and a vector between the specific vertex and its posterior vertex, and determine a direction vector to determine the position of an interpolating vertex corresponding to the specific vertex, as illustrated in FIGS. 4 to 7. The image processing apparatus 200 may normalize a vector between the specific vector and its prior vector and a vector between the specific vector and its posterior vector, and determine the direction and the size of the direction vector. Further, the image processing apparatus 200 may determine the sign of the direction vector according to whether the angle formed by the specific vertex is concave or convex. The image processing apparatus 200 may utilize the scaling information regarding the direction vector information and the image size, and determine the position of the interpolating vertex.

The image processing apparatus 200 may interpolate the space between the inputted polygon and a polygon constructed by the interpolating vertex according to an interpolating coefficient at S1030. Specifically, the space between the inputted polygon and the polygon constructed by the interpolating vertex may be divided into a plurality of the areas. The image processing apparatus 200 may apply different interpolating coefficients to each of a plurality of the areas respectively, apply different translucency degrees according to each interpolating coefficient, and interpolate the space.

The image processing apparatus 200 may output the polygonal image including the interpolated space between the inputted polygon and the polygon constructed by the interpolating vertex at S1040.

According to the image processing method as described above, the aliasing is removed when complex polygons are displayed or sizes of images are changed, and only the primitives, not a whole inputted image, are interpolated to overcome the aliasing. Thus, the calculating amount decreases.

Program codes to implement the image processing method according to the above various embodiments may be stored in various types of computer-readable recording medium. Specifically, the program codes may be stored in various types of terminal readable recording medium such as the RAM (Random Access Memory), the flash memory, the ROM (Read Only Memory), the EPROM (Erasable Programmable ROM), the EEPROM (Electronically Erasable and Programmable ROM), the register, the hard disk, the removable disk, the memory card, the USB memory, and the CD-ROM. The program codes may be read from memory and executed by computer including a processor and displayed on a display device such as a computer monitor, television, etc.

The foregoing exemplary embodiments and advantages are merely exemplary and are not to be construed as limiting the inventive concept. The present teaching can be readily applied to other types of apparatuses. Also, the description of the exemplary embodiments of the present inventive concept is intended to be illustrative, and not to limit the scope of the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image processing method, comprising:

   receiving data information of a polygonal image;
   determining a position of an interpolation vertex on an exterior of vertexes of the polygonal image using the data information of the polygonal image;
   interpolating a space between the polygonal image and a polygon constructed by the interpolating vertex; and
   outputting an interpolated polygonal image according to the interpolated space.

2. The image processing method of claim 1, wherein the data information of the polygonal image comprises at least one of position information regarding the vertexes of the polygonal image, information regarding whether an angle of each of the vertexes of the polygonal image is concave or convex, and information of an interpolating coefficient.

3. The image processing method of claim 2, wherein the determining the position of the interpolating vertex comprises:

   determining a direction vector to determine the position of an interpolating vertex corresponding to a specific vertex, using a vector between the specific vertex and a prior vertex and a vertex between the specific vertex and a posterior vertex; and
   determining the position of the interpolating vertex corresponding to the specific vertex using the direction vector.

4. The image processing method of claim 3, wherein the determining the direction vector comprises normalizing the vector between the specific vertex and the prior vertex and normalizing the vector between the specific vertex and the posterior vertex, and determining the direction and the size of the direction vector.

5. The image processing method of claim 3, wherein the determining the direction vector comprises determining a sign of the direction vector according to whether an angle made by the specific vertex is concave or convex.

6. The image processing method of claim 3, wherein the determining the position of the interpolating vertex comprises determining the position of the interpolating vertex using scaling information regarding information of the direction vector and a size of the image.

7. The image processing method of any of claims 1 to 6, wherein a space between the polygonal image and the polygon constructed by the interpolating vertex is divided into a plurality of areas, and different interpolating coefficients are applied to each of the plurality of the areas respectively.

**8.** The image processing method of claim 7, wherein the interpolating comprises interpolating the space between the polygonal image and the polygon constructed by the interpolating vertex by applying a translucency degree according to the interpolating coefficient.

**9.** An image processing apparatus, comprising:

a data inputter which receives data information of a polygonal image;
a graphic engine processor which determines a position of an interpolation vertex on an exterior of vertexes of the polygonal image using the data information of the polygonal image, interpolates a space between the polygonal image and a polygon constructed by the interpolating vertex, and
outputs an interpolated polygonal image according to the interpolated space.

**10.** The image processing apparatus of claim 9, the data information of the polygonal image comprises at least one of position information regarding the vertexes of the polygonal image, information regarding whether an angle of each of the vertexes of polygonal image is concave or convex, and information of an interpolating coefficient.

**11.** The image processing apparatus of claim 10, wherein the graphic engine processor determines a direction vector to determine the position of an interpolating vertex corresponding to a specific vertex, using a vector between the specific vertex and a prior vertex and a vertex between the specific vertex and a posterior vertex, and determines the position of the interpolating vertex corresponding to the specific vertex using the direction vector.

**12.** The image processing apparatus of claim 10, wherein the graphic engine processor normalizes the vector between the specific vertex and the prior vertex and normalizes the vector between the specific vertex and the posterior vertex, and determines the direction and the size of the direction vector.

**13.** The image processing apparatus of claim 10, wherein the graphic engine processor determines a sign of the direction vector according to whether an angle made by the specific vertex is concave or convex.

**14.** The image processing apparatus of claim 10, wherein the graphic engine processor determines the position of the interpolating vertex using scaling information regarding information of the direction vector and a size of the image.

**15.** The image processing apparatus of claim 9, wherein the graphic engine processor divides a space between the polygonal image and the polygon constructed by interpolating vertex into a plurality of areas, and interpolates the space between the polygonal image and the interpolating vertex by applying different interpolating coefficients to each of the plurality of the areas respectively.

FIG. 1

# FIG. 2

200

230

210 — DATA INPUTTER

220 — DATA CONTROLLER

GRAPHIC ENGINE PROCESSOR

DISPLAY — 240

# FIG. 3

# FIG. 4

# FIG. 5

# FIG. 6

EXTERIOR VERTEX
INTERPOLATING
COEFFICIENT = 0

INTERIOR VERTEX
INTERPOLATING
VERTEX = 1

# FIG. 7A

INTERPOLATING
COEFFICIENT

DISTANCE

# FIG. 7B

INTERPOLATING
COEFFICIENT

DISTANCE

# FIG. 7C

INTERPOLATING
COEFFICIENT

DISTANCE

# FIG. 8

FIG. 9

# FIG. 10

```
                    ┌─────────────┐
                    │    START    │
                    └──────┬──────┘
                           ▼
        ┌──────────────────────────────┐
        │    INPUT DATA INFORMATION     │ ～S1010
        │      OF POLYGONAL IMAGE       │
        └──────────────┬───────────────┘
                       ▼
        ┌──────────────────────────────┐
        │  UTILIZE DATA INFORMATION AND │
        │ DETERMINE INTERPOLATING VERTEX│ ～S1020
        │           POSITION            │
        └──────────────┬───────────────┘
                       ▼
        ┌──────────────────────────────┐
        │ INTERPOLATE DIMENSION BETWEEN │
        │ INPUTTED POLYGON AND POLYGON  │
        │ CONSTRUCTED BY INTERPOLATING  │ ～S1030
        │      VERTEX ACCORDING TO      │
        │     INTERPOLATING VERTEX      │
        └──────────────┬───────────────┘
                       ▼
        ┌──────────────────────────────┐
        │ OUTPUT INTERPOLATED POLYGONAL │ ～S1040
        │            IMAGE              │
        └──────────────┬───────────────┘
                       ▼
                ┌─────────────┐
                │     END     │
                └─────────────┘
```

Europäisches
Patentamt

European
Patent Office

Office européen
des brevets

# EUROPEAN SEARCH REPORT

Application Number

EP 13 16 7105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/135795 A1 (RAUBACHER CHRISTOPHER [US] ET AL) 15 July 2004 (2004-07-15) | 1,9 | INV. G06T11/20 |
| A | * abstract * * paragraphs [0022] - [0022], [0042] - [0044], [0048], [0050], [0051], [0055] * | 2-8, 10-15 | |
| A | US 7 995 073 B1 (SHEMANAREV MAXIM [US] ET AL) 9 August 2011 (2011-08-09) * abstract * * column 2, lines 29-59 * * column 6, lines 8-44 * * column 6, line 56 - column 7, line 16 * * column 8, line 57 - column 9, line 8 * | 1-15 | |
| A | US 6 791 569 B1 (MILLET TIMOTHY [US] ET AL) 14 September 2004 (2004-09-14) * abstract * * column 2, lines 46-67 * * column 3, lines 60-67 * * column 5, lines 11-30 * | 1-15 | |
| | | | TECHNICAL FIELDS SEARCHED (IPC) |
| A | LIN S ET AL: "An anti-aliasing method for parallel rendering", COMPUTER GRAPHICS INTERNATIONAL, 1998. PROCEEDINGS HANNOVER, GERMANY 22-26 JUNE 1998, LOS ALAMITOS, CA, USA,IEEE COMPUT. SOC, US, 22 June 1998 (1998-06-22), pages 228-235, XP010291522, DOI: 10.1109/CGI.1998.694270 ISBN: 978-0-8186-8445-6 * abstract * * paragraphs [0002], [0003] * | 1-15 | G06T |

The present search report has been drawn up for all claims

| Place of search | Date of completion of the search | Examiner |
|---|---|---|
| Munich | 20 November 2013 | Casteller, Maurizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 16 7105

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2013

| Patent document cited in search report | Publication date | Patent family member(s) | Publication date |
|---|---|---|---|
| US 2004135795 A1 | 15-07-2004 | US 2004135795 A1<br>US 2006214946 A1 | 15-07-2004<br>28-09-2006 |
| US 7995073 B1 | 09-08-2011 | NONE | |
| US 6791569 B1 | 14-09-2004 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120050084